# EUROPÄISCHE PATENTANMELDUNG

(11) **EP 4 015 558 A1**
(43) Veröffentlichungstag der Anmeldung: **22.06.2022**
(21) Anmeldenummer: 20214241.0
(22) Anmeldetag: 15.12.2020
(51) Int. Cl.: C08G 59/40, C09J 163/00, C08G 59/68

(54) **VERFAHREN ZUR BÖRDELFALZVERKLEBUNG**

(71) Anmelder: SIKA TECHNOLOGY AG, 6340 Baar (CH)
(72) Erfinder: Gallo, Dominique, 8106 Adlikon bei Regensdorf (CH); Cakic, Goran, 8037 Zürich (CH); Munzinger, Noah, 8047 Zürich (CH)
(74) Vertreter: Sika Patent Attorneys

(57) **Zusammenfassung**

Die vorliegende Erfindung betrifft ein Verfahren zur Herstellung einer Bördelfalzverklebung. Das Verfahren verwendet eine einkomponentige hitzehärtende Epoxidharzzusammensetzung umfassend 20 - 60 Gew.-% von mindestens einem Epoxidharz **A,** einen latenten Härter für Epoxidharze **B,** 10 - 40 Gew.-% von einem Zähigkeitsverbesserer **D** und 4 - 12 Gew.-% von einem bei Raumtemperatur festen kristallinen Polyesterpolyol **PP.** Dies ermöglicht Zusammensetzungen, welche für Sprühapplikationen geeignet sind und welche bei der Bördelung nicht aus dem Bördelfalz ausgepresst werden.

## Beschreibung

### Technisches Gebiet

Die Erfindung betrifft das Gebiet der Bördelfalzverklebungen.

### Stand der Technik

Bördelfalzverklebungen werden schon seit langem in der industriellen Fertigung verwendet. Es ist bekannt Transportmittelteile, wie Türen, Kofferraumhauben, Rückwandklappen Motorraumhauben und dergleichen aus einem Aussenblech und einem Innenblech mittels Falzverbindung herzustellen. Um eine Fixierung des Falzes zu gewährleisten wird hierbei ein Klebstoff verwendet, welcher das Innenblech mit dem Aussenblech verbindet.

Die im Stand der Technik gegenwärtig eingesetzten Klebstoffe werden bei der Bördelung aufgrund ihrer Konsistenz aus dem Bördelfalz ausgepresst. Klebstoffreste ausserhalb des Flansches sind ästhetisch wenig ansprechend, stellen eine Herausforderung für das spätere Aufbringen von Dichtungsmassen dar und erfordern daher einen zusätzlichen Reinigungsprozess, um entfernt zu werden.

Weiter sind gängige Klebstoffe oft nicht geeignet, um in neuartigen Sprühapplikationen aufgetragen zu werden. Diese Verfahren tragen den Klebstoff mittels Düsen als dünnen Strahl, konstant oder als Tropfen, auf das Substrat auf. Dies erlaubt eine kontrollierte Applikation in Bezug auf den Applikationsort und die applizierte Menge des Klebstoffs.

EP 2 134 799 offenbart einen Auftrag eines Klebstoffs für Bördelfalzverklebungen, welcher vorzugsweise Abstandhalter enthält, bei 25°C eine Viskosität von > 900 Pas aufweist und mit dem Ziel eingesetzt wird, die Bildung von Blasen und Rissen im Bördelfalzklebstoff und die daraus resultierende Korrosionsanfälligkeit zu reduziert.

US 2008/0045670 A1 beschreibt einen Epoxidklebstoff zum Verkleben von Fahrzeugteilen. Der Epoxidklebstoff enthält ein Polymer umfassend ein Polyestersegment, wobei das Polymer bei Raumtemperatur zumindest teilweise kristallin ist und eine Erweichungstemperatur im Bereich von 40 bis 125°C aufweist. Das Polymer dient dem Ziel, eine Auswaschbeständigkeit des Klebstoffs im KTL-Bad ohne Vorgelierung oder Vorhärtung des Klebstoffs zu gewährleisten.

Es besteht daher das Bedürfnis nach Verfahren zur Bördelfalzverklebung, welche für Sprühapplikationen geeignet sind und bei welchen bei der Bördelung kein Klebstoff aus dem Bördelfalz ausgepresst wird.

### Darstellung der Erfindung

Aufgabe der vorliegenden Erfindung ist es daher, ein Verfahren zur Bördelfalzverklebung zur Verfügung zu stellen, welches welche für Sprühapplikationen geeignet sind und bei welchen bei der Bördelung kein Klebstoff aus dem Bördelfalz ausgepresst wird.

Diese Aufgabe konnte überraschenderweise durch das Verfahren gemäss Anspruch 1 gelöst werden.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Die vorliegende Erfindung betrifft in einem ersten Aspekt ein Verfahren zur Herstellung einer Bördelfalzverklebung umfassend mindestens die Schritte
a) Applikation einer einkomponentigen hitzehärtenden Epoxidharzzusammensetzung auf ein Innenblech oder auf ein Aussenblech;
b) Kontaktieren der einkomponentigen hitzehärtenden Epoxidharzzusammensetzung mit dem Innenblech oder dem Aussenblech;
c) Bördeln des Aussenbleches um das Innenblech, so dass im Innenraum des Bördelfalzes die einkomponentige hitzehärtende Epoxidharzzusammensetzung vorhanden ist;
d) Verpressen des Bördelfalzes;
e) Einführen thermischer Energie in die einkomponentige hitzehärtende Epoxidharzzusammensetzung.
Die einkomponentige hitzehärtende Epoxidharzzusammensetzung umfasst:
- 20 - 60 Gew.-%, bezogen auf das Gesamtgewicht der einkomponentigen hitzehärtenden Epoxidharzzusammensetzung, von mindestens einem Epoxidharz **A** mit durchschnittlich mehr als einer Epoxidgruppe pro Molekül, enthaltend mindestens ein Epoxid-Flüssigharz **A1,** vorzugsweise mindestens ein Epoxid-Festharz **A2,** sowie vorzugsweise mindestens einen Epoxidgruppen-tragenden Reaktivverdünner **A3,** wobei der Anteil an Epoxid-Flüssigharz **A1** 10 - 100 Gew.-%, bezogen auf das Gesamtgewicht des Epoxidharz **A,** beträgt;
- mindestens einen latenten Härter für Epoxidharze B;
- 10 - 40 Gew.-%, insbesondere 20 - 30 Gew.-%, bezogen auf das Gesamtgewicht der einkomponentigen hitzehärtenden Epoxidharzzusammensetzung, von mindestens einem Zähigkeitsverbesserer **D** ausgewählt aus der Gruppe bestehend aus endständig blockierten Polyurethanpolymeren **D1,** Flüssigkautschuken **D2** und Core-Shell-Polymeren **D3,** vorzugsweise handelt es sich um endständig blockiertes Polyurethanpolymer **D1;**
- 4 - 12 Gew.-%, bezogen auf das Gesamtgewicht der einkomponentigen hitzehärtenden Epoxidharzzusammensetzung, von mindestens einem bei Raumtemperatur festen kristallinen Polyesterpolyol **PP.**

In diesem Dokument ist die Verwendung des Terms "unabhängig voneinander" in Zusammenhang mit Substituenten, Reste oder Gruppen dahin gehend auszulegen, dass in demselben Molekül die gleich bezeichneten Substituenten, Resten oder Gruppen gleichzeitig mit unterschiedlicher Bedeutung auftreten können.
Die Vorsilbe "Poly" in Substanzbezeichnungen wie "Polyol", "Polyisocyanat", "Polyether" oder "Polyamin" weist im vorliegenden Dokument darauf hin, dass die jeweilige Substanz formal mehr als eine der in ihrer Bezeichnung vorkommenden funktionellen Gruppe pro Molekül enthält.
Als "Raumtemperatur" wird im vorliegenden Dokument eine Temperatur von 23 °C bezeichnet.

Die einkomponentige hitzehärtende Epoxidharzzusammensetzung umfasst 20 - 60 Gew.-%, vorzugsweise 25 - 55 Gew.-%, 30 - 55 Gew.-%, 35 - 55 Gew.-%, insbesondere 40 - 50 Gew.-%, bezogen auf das Gesamtgewicht der einkomponentigen hitzehärtenden Epoxidharzzusammensetzung, von mindestens einem Epoxidharz **A** mit durchschnittlich mehr als einer Epoxidgruppe pro Molekül.
Das Epoxidharz **A** enthält mindestens ein Epoxid-Flüssigharz **A1,** vorzugsweise mindestens ein Epoxid-Festharz **A2,** sowie vorzugsweise einen Epoxidgruppentragenden Reaktivverdünner **A3.**

Vorzugsweise enthält das Epoxidharz **A** mindestens ein Epoxid-Flüssigharz **A1,** mindestens ein Epoxid-Festharz **A2** sowie mindestens einen Epoxidgruppentragenden Reaktivverdünner **A3.**

Vorzugsweise besteht das Epoxidharz **A** zu mehr als 80 Gew.-%, insbesondere mehr als 90 Gew.-%, mehr als 95 Gew.-%, mehr als 98 Gew.-%, mehr als 99 Gew.-%, mehr als 99.9 Gew.-%, besonders bevorzugt vollständig, aus dem mindestens einen Epoxid-Flüssigharz **A1,** vorzugsweise mindestens einen Epoxid-Festharz **A2,** sowie vorzugsweise mindestens einen Epoxidgruppentragenden Reaktivverdünner **A3.**

Der Begriff "Epoxid-Festharz" ist dem Epoxid-Fachmann bestens bekannt und wird im Gegensatz zu "Epoxid-Flüssigharzen" verwendet. Die Glastemperatur von Festharzen liegt über Raumtemperatur, d.h. sie lassen sich bei Raumtemperatur zu schüttfähigen Pulvern zerkleinern.

Bevorzugte Epoxidharze weisen die Formel (II) auf 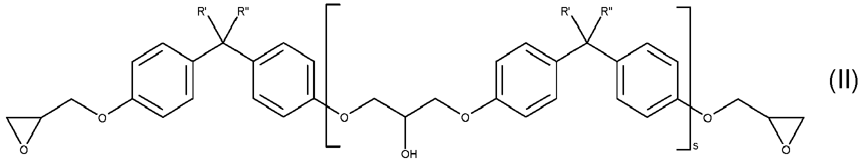 Hierbei stehen die Substituenten R' und R" unabhängig voneinander entweder für H oder CH₃. Bei Epoxid-Festharzen **A2** steht der Index s für einen Wert von > 1.5, insbesondere von 2 bis 12. Derartige Epoxid-Festharze **A2** sind kommerziell erhältlich beispielsweise von Dow oder Huntsman oder Hexion.

Verbindungen der Formel (II) mit einem Index s von 1 bis 1.5 werden vom Fachmann als Semisolid-Epoxidharze bezeichnet. Für die hier vorliegende Erfindung werden sie ebenfalls als Festharze betrachtet. Bevorzugt als Epoxid-Festharze **A2** sind jedoch Epoxidharze im engeren Sinn, d.h. wo der Index s einen Wert von > 1.5 aufweist.

Bei Epoxid-Flüssigharze **A1** steht der Index s für einen Wert von kleiner als 1. Bevorzugt steht s für einen Wert von kleiner als 0.2.

Es handelt sich somit vorzugsweise um Diglycidylether von Bisphenol-A (DGEBA), von Bisphenol-F sowie von Bisphenol-A/F. Solche Flüssigharze sind beispielsweise als Araldite^{®} GY 250, Araldite^{®} PY 304, Araldite^{®} GY 282 (Huntsman) oder D.E.R.^{™} 331 oder D.E.R.^{™} 330 (Dow) oder Epikote 828 (Hexion) erhältlich.

Weiterhin geeignet als Epoxidharz **A** sind sogenannte Epoxid-Novolake. Diese weisen insbesondere die folgende Formel auf: 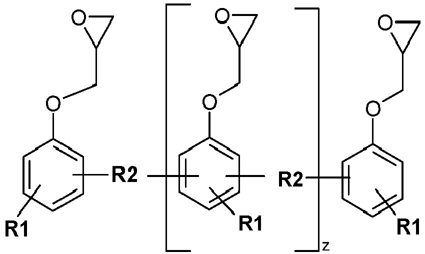 mit 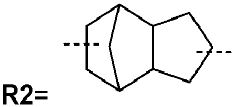 oder CH₂, **R1** = H oder Methyl und z = 0 bis 7. Bei Epoxid-Festharzen **A2** steht der Index z insbesondere für einen Wert von > 3, insbesondere von > 3 bis 7. Bei Epoxid-Flüssigharzen **A1** steht der Index z insbesondere für einen Wert von kleiner als 3. Bevorzugt steht z für einen Wert von 2.2 - < 3. Insbesondere handelt es sich hierbei um Phenol- oder Kresol-Epoxid-Novolake (**R2** = CH₂). Solche Epoxidharze sind unter dem Handelnamen EPN oder ECN sowie Tactix^{®} von Huntsman oder unter der Produktereihe D.E.N.^{™} von Dow Chemical kommerziell erhältlich.

Besonders bevorzugt stellt das Epoxid-Flüssigharz **A1** und/oder das Epoxid-Festharz **A2** ein Epoxid-Flüssigharz der Formel (II) dar, insbesondere stellen beide ein Epoxid-Flüssigharz der Formel (II) dar.

Der Anteil an Epoxid-Flüssigharz **A1** beträgt 10 - 100 Gew.-%, bezogen auf das Gesamtgewicht des Epoxidharz **A.** Vorzugsweise beträgt der Anteil an Epoxid-Flüssigharz **A1** beträgt 10 - 100 Gew.-%, bezogen auf das Gesamtgewicht des Epoxidharz **A,** 20 - 100 Gew.-%, 30 - 100 Gew.-%, 30 - 95 Gew.-%, 30 - 90 Gew.-%, 30 - 80 Gew.-%, 30 - 70 Gew.-%, insbesondere 30 - 60 Gew.-%.

Vorteilhaft beträgt der Gesamtanteil des Epoxid-Flüssigharz **A1** 10 - 50 Gewichts-%, 15 - 45 Gewichts-%, 15 - 35 Gewichts-%, vorzugsweise 15 - 25 Gewichts-%, bezogen auf das Gesamtgewicht der Epoxidharzzusammensetzung.

Der Anteil an Epoxid-Festharz **A2** beträgt, bezogen auf das Gesamtgewicht des Epoxidharz **A,** vorzugsweise 0 - 70 Gew.-%, 10 - 70 Gew.-%, 20 - 70 Gew.-%, 30 - 70 Gew.-%, 40 - 70 Gew.-%, 40 - 65 Gew.-%, insbesondere 50 - 65 Gew.-%.

Vorteilhaft beträgt der Gesamtanteil des Epoxid-Festharz **A2** 0 - 35 Gewichts-%, 5 - 35 Gewichts-%, 10 - 35 Gewichts-%, 15 - 35 Gewichts-%, vorzugsweise 20 - 30 Gewichts-%, bezogen auf das Gesamtgewicht der Epoxidharzzusammensetzung.

Vorzugsweise beträgt das Gewichtsverhältnis von Epoxid-Flüssigharz **A1** zu Epoxid-Festharz **A2 (A1/A2)** von 0.25 - 3.75, insbesondere von 0.4 - 3.5. Dies ist dahingehend von Vorteil, dass dadurch besonders hohe Werte für die Verpresskraft erreicht werden können bei gleichzeitig tiefer Viskosität bei 80°C. Weiter werden dadurch verbesserte Werte für E-Modul und Zugfestigkeit erhalten. Dies ist beispielsweise ersichtlich aus dem Vergleich von E2 mit E4-E6 und mit E7 in Tabelle 1.

Es kann weiter vorteilhaft sein, wenn das Gewichtsverhältnis von Epoxid-Flüssigharz **A1** zu Epoxid-Festharz **A2 (A1/A2)** von 0.25 - 3.75, 0.4 - 3.5, 0.5 - 3.0, 0.75 -2.5, insbesondere von 1.0 - 2.0, beträgt.
Dabei werden die vorgehend genannten Vorteile erreicht, wobei hier der Vorteil einer tiefen Viskosität bei 80°C bei gleichzeitig hohen Werten der anderen genannten Werten besonders ausgeprägt ist. Weiter werden dadurch verbesserte Werte für E-Modul und Zugfestigkeit erhalten. Dies ist beispielsweise ersichtlich aus dem Vergleich von E5 mit E4, E6-E7 und mit E2 in Tabelle 1.

Weiter kann es vorteilhaft sein, wenn das Gewichtsverhältnis von Epoxid-Flüssigharz **A1** zu Epoxid-Festharz **A2 (A1/A2)** von 0.25 - 3.75, 0.4 - 3.5, 0.4 - 3.0, 0.4 -2.5, 0.4 - 2.0, 0.4 - 1.5, 0.4 - 1.0, insbesondere von 0.4 - 0.75, beträgt. Dabei werden die vorgehend genannten Vorteile erreicht, wobei hier der Vorteil eines hohen E-Modul, einer hohen Zugfestigkeit und einer hohen Zugscherfestigkeit bei gleichzeitig hohen Werten der anderen genannten Werten besonders ausgeprägt ist. Dies ist beispielsweise ersichtlich aus dem Vergleich von E6 mit E4-5, E7 und mit E2 in Tabelle 1.

Das Epoxidharz **A** enthält vorzugsweise einen Epoxidgruppen-tragenden Reaktivverdünner **A3.** Solche Reaktivverdünner sind dem Fachmann bekannt. Bevorzugte Beispiele für Epoxidgruppen-tragende Reaktivverdünner **A3** sind ausgewählt aus der Liste bestehend aus:
- Glycidylether von monofunktionellen gesättigten oder ungesättigten, verzweigten oder unverzweigten, zyklischen oder offenkettigen C₄ - C₃₀ Alkoholen, z.B. Butanolglycidylether, Hexanolglycidylether, 2-Ethylhexanolglycidylether, Allylglycidylether, Tetrahydrofurfuryl- und Furfurylglycidylether, Trimethoxysilylglycidylether;
- Glycidylether von difunktionellen gesättigten oder ungesättigten, verzweigten oder unverzweigten, zyklischen oder offenkettigen C₂ - C₃₀ Alkolen, z.B Ethylenglykol-, Butandiol-, Hexandiol-, Oktandiolgylcidylether, Cyclohexandimethanoldigylcidylether, Neopentylglycoldiglycidylether;
- Glycidylether von tri- oder polyfunktionellen, gesättigten oder ungesättigten, verzweigten oder unverzweigten, zyklischen oder offenkettigen Akoholen wie epoxidiertes Rhizinusöl, epoxidiertes Trimethylolpropan, epoxidiertes Pentaerythrol oder Polyglycidylether von aliphatischen Polyolen wie Sorbitol, Glycerin, Trimethylolpropan;
- Glycidylether von Phenol- und Anilinverbindungen wie Phenylglycidylether, Kresylglycidylether, p-tert.-Butylphenylglycidylether, Nonylphenolglycidylether, 3-n-Pentadecenyl-glycidylether (aus Cashewnuss-Schalen-Öl), N,N-Diglycidylanilin;
- Epoxidierte Amine wie N, N-Diglycidylcyclohexylamin;
- Epoxidierte Mono- oder Dicarbonsäuren wie Neodecansäure-glycidylester, Methacrylsäureglycidylester, Benzoesäureglycidylester, Phthalsäure-, Tetra- und Hexahydrophthalsäurediglycidylester, Diglycidylester von dimeren Fettsäuren; und
- Epoxidierte di- oder trifunktionelle, nieder- bis hochmolekulare Polyetherpolyole wie Polyethylenglycol-diglycidylether, Polypropyleneglycoldiglycidylether.

Besonders bevorzugt sind Epoxidgruppen-tragende Reaktivverdünner **A3** ausgewählt aus der Liste bestehend aus Hexandioldiglycidylether, Kresylglycidylether, p-*tert*.-Butylphenylglycidylether, Polypropylenglycoldiglycidylether und Polyethylenglycoldiglycidylether.

Der Anteil an Epoxidgruppen-tragenden Reaktivverdünnern **A3** beträgt, bezogen auf das Gesamtgewicht des Epoxidharz **A,** vorzugsweise 0 - 50 Gew.-%, 1 - 20 Gew.-%, 2 - 10 Gew.-%, 3 - 7.5 Gew.-%, insbesondere 4 - 6 Gew.-%.

Vorteilhaft beträgt der Gesamtanteil des epoxidgruppentragenden Reaktivverdünners **A3** 0.1 - 15 Gewichts-%, vorzugsweise 0.5 - 5 Gewichts-%, bezogen auf das Gesamtgewicht der Epoxidharzzusammensetzung.

Die einkomponentige hitzehärtende Epoxidharzzusammensetzung umfasst 4 - 12 Gew.-%, bezogen auf das Gesamtgewicht der einkomponentigen hitzehärtenden Epoxidharzzusammensetzung, von mindestens einem bei Raumtemperatur festen kristallinen Polyesterpolyol **PP.**

Zusammensetzungen, welche weniger als 4 Gew.-% von bei Raumtemperatur festem kristallinen Polyesterpolyol **PP** aufweisen, haben eine ungenügende Verpresskraft. Zusammensetzungen, welche mehr als 12 Gew.-% von bei Raumtemperatur festem kristallinen Polyesterpolyol **PP** aufweisen haben zu tiefe Werte für den Impact Peel sowie für das E-Modul, die Bruchdehnung, die Zugfestigkeit und die Zugscherfestigkeit. Dies ist beispielsweise ersichtlich aus dem Vergleich von Ref.1 und Ref.5 mit E1 - E7 in Tabelle 1. Weiter ist im Vergleich von Ref.2-Ref.4 mit E1 - E7 in Tabelle 1 ersichtlich, dass eine Verwendung von amorphen Polyesterpolyolen in einer ungenügenden Verpresskraft resultiert.

Vorzugsweise beträgt der Anteil von mindestens einem bei Raumtemperatur festen kristallinen Polyesterpolyol **PP** 5 - 10 Gew.-%, 6 - 9 Gew.-%, insbesondere 7 - 8 Gew.-%, bezogen auf das Gesamtgewicht der einkomponentigen hitzehärtenden Epoxidharzzusammensetzung.

Dies ist dahingehend von Vorteil, dass dadurch besonders hohe Werte für die Bruchdehnung sowie den Impact Peel bei 23°C erreicht werden können. Weiter werden dadurch gute Werte für jeweils E-Modul, Zugfestigkeit, Zugscherfestigkeit, Impact Peel bei -30°C, Viskosität bei 80°C sowie Verpresskraft gleichzeitig gewährleistet.

Besonders geeignete bei Raumtemperatur feste kristalline Polyesterpolyole **PP** sind Polyesterdiole. Insbesondere geeignete Polyesterdiole sind solche hergestellt aus Adipinsäure, Azelainsäure, Sebacinsäure, Dodecandicarbonsäure, Dimerfettsäure, Phthalsäure, Isophthalsäure und Terephthalsäure als Dicarbonsäure und aus Ethylenglykol, Diethylenglykol, Neopentylglykol, 1,4-Butandiol, 1,6-Hexandiol, Dimerfettsäurediol und 1,4-Cyclohexandimethanol als zweiwertigem Alkohol. Insbesondere geeignet sind auch Polyesterdiole hergestellt aus ε-Caprolacton und einem der vorgenannten zweiwertigen Alkohole als Starter.

Bevorzugte bei Raumtemperatur feste, kristalline Polyesterpolyole **PP** haben ein zahlenmittleres Molekulargewicht von 1500 bis 9000, bevorzugt 1500 bis 6000, besonders bevorzugt von 2500 - 5000.

Unter "Molekulargewicht" versteht man im vorliegenden Dokument die molare Masse (in Gramm pro Mol) eines Moleküls oder eines Teils eines Moleküls, auch als "Rest" bezeichnet. Das "Molekulargewicht" bezeichnet im Zusammenhang mit Oligo- oder Polymeren das Zahlenmittel Mₙ einer oligomeren oder polymeren Mischung von Molekülen, und wird üblicherweise mittels Gelpermeationschromatographie (GPC) gegen Polystyrol als Standard bestimmt wird.

Das bei Raumtemperatur feste, kristalline Polyesterpolyol **PP** hat vorzugsweise einen Schmelzpunkt von 50 bis 110 °C, insbesondere 70 bis 95 °C, besonders bevorzugt 80 bis 90 °C. Der Schmelzpunkt (melting point) wird vorzugsweise mit einem DSC-Gerät (DIN 53 765) bestimmt. Die Probe und ein leerer Referenztiegel werden mit einer Aufheizrate von 20°C/min erwärmt. Der Schmelzpunkt entspricht dem Maximum des Schmelzpeaks.

Ein bevorzugtes bei Raumtemperatur festes, kristallines Polyesterpolyol **PP** hat eine Hydroxyzahl (Milliäquivalente KOH pro Gramm Polyesterpolyol) von 20 bis 50, bevorzugt 25 bis 40, insbesondere 25 bis 35.

Weiter haben bevorzugte bei Raumtemperatur feste, kristalline Polyesterpolyole **PP** eine Hydroxyfunktionalität von etwa 2, insbesondere von 1.9 bis 2.1 (mittlere Anzahl von Hydroxygruppen pro Polymerkette).

Kommerziell erhältliche bei Raumtemperatur feste, kristalline Polyesterpolyole **PP** sind u.a. Fineplus HM 3123, HM 3126 oder Fineplus HM 3606 (Dic Performance Resins).

Weiter ist es vorteilhaft, wenn das Gewichtsverhältnis von Epoxidharz **A** mit durchschnittlich mehr als einer Epoxidgruppe pro Molekül zu bei Raumtemperatur festem kristallinen Polyesterpolyol **PP (A/PP)** von 3 - 15, 4 - 12, 4.5 -10, 5 - 8, insbesondere von 6 - 7, beträgt.

Weiter kann es vorteilhaft sein, wenn die einkomponentige Epoxidharzzusammensetzung weniger als 3 Gewichts-%, vorzugsweise weniger als 2 Gewichts-%, weniger als 1 Gewichts-%, weniger als 0.5 Gewichts-%, weniger als 0.2 Gewichts-%, weniger als 0.1 Gewichts-%, insbesondere weniger als 0.05 Gewichts-%, insbesondere bevorzugt kein bei Raumtemperatur flüssiges und/oder amorphes Polyesterpolyol, bezogen auf das Gesamtgewicht der Epoxidharzzusammensetzung, aufweist.

Die einkomponentige hitzehärtende Epoxidharzzusammensetzung umfasst mindestens einen latenten Härter für Epoxidharze **B.** Dieser wird vorzugsweise durch erhöhte Temperatur aktiviert, vorzugsweise bei Temperaturen von 70°C oder mehr.

Es handelt sich hierbei vorzugsweise um einen Härter, welcher ausgewählt ist aus der Gruppe bestehend aus Dicyandiamid; Guanamine, insbesondere Benzoguanamin; Guanidine; Anhydride von mehrwertigen Carbonsäuren, insbesondere 1-Methyl-5-norbornen-2,3-dicarbonsäureanhydrid; Dihydrazide und Aminoguanidine.

Vorzugsweise ist der Härter **B** ausgewählt aus der Gruppe bestehend aus Guanidine, insbesondere Dicyandiamid; Anhydride von mehrwertigen Carbonsäuren, insbesondere 1-Methyl-5-norbornen-2,3-dicarbonsäureanhydrid und Dihydrazide.

Besonders bevorzugt ist der Härter **B** ausgewählt ist aus der Gruppe bestehend aus Guanidine, insbesondere Dicyandiamid, und Dihydrazide.

Besonders bevorzugt als Härter **B** ist Dicyandiamid.

Die Menge des latenten Härter **B** für Epoxidharze, beträgt vorteilhaft 0.1 - 30 Gew.-%, insbesondere 0.2 - 10 Gew.-%, bevorzugt 1 - 10 Gew.-%, insbesondere bevorzugt 5 - 10 Gew.-%, bezogen auf das Gewicht des Epoxidharzes **A.**

Vorzugsweise enthält die hitzehärtende Epoxidharzzusammensetzung zusätzlich mindestens einen Beschleuniger **C** für Epoxidharze. Solche beschleunigend wirksame Härter sind vorzugsweise substituierte Harnstoffe, wie beispielsweise 3-(3-Chlor-4-methylphenyl)-1,1-dimethylharnstoff (Chlortoluron) oder Phenyl-Dimethylharnstoffe, insbesondere p-Chlorphenyl-N,N-dimethylharnstoff (Monuron), 3-Phenyl-1,1-dimethylharnstoff (Fenuron) oder 3,4-Dichlorphenyl-N,N-dimethylharnstoff (Diuron). Weiterhin können Verbindungen der Klasse der Imidazole, wie 2-Isopropylimidazol oder 2-Hydroxy-N-(2-(2-(2-hydroxyphenyl)-4,5-dihydroimidazol-1-yl)ethyl)benzamid, Imidazoline, Trihalogenid-Komplexe, bevorzugt BF₃-Komplexe, blockierte Amine und enkapsulierte Amine eingesetzt werden.

Vorzugsweise ist der Beschleuniger **C** für Epoxidharze ausgewählt aus der Liste bestehend aus substituierten Harnstoffen, Imidazolen, Imidazolinen und blockierten Aminen, insbesondere substituierten Harnstoffen.

Die Menge des Beschleunigers C beträgt vorteilhaft 0.1 - 30 Gew.-%, insbesondere 0.2 -10 Gew.-%, bevorzugt 1 - 10 Gew.-%, insbesondere bevorzugt 5 - 10 Gew.-%, bezogen auf das Gewicht des Epoxidharzes **A.**

Ganz besonders bevorzugt handelt es sich bei dem latenten Härter **B** um ein Guanidin, insbesondere Dicyandiamid, und die einkomponentige hitzehärtende Epoxidharzzusammensetzung weist zusätzlich einen Beschleuniger **C** für Epoxidharze ausgewählt aus der Liste bestehend aus substituierten Harnstoffen und blockierten Aminen, insbesondere substituierten Harnstoffen, auf.

Die einkomponentige hitzehärtende Epoxidharzzusammensetzung umfasst 10 - 40 Gew.-%, insbesondere 20 - 30 Gew.-%, bezogen auf das Gesamtgewicht der einkomponentigen hitzehärtenden Epoxidharzzusammensetzung, von mindestens einem Zähigkeitsverbesserer **D** ausgewählt aus der Gruppe bestehend aus endständig blockierten Polyurethanpolymeren **D1,** Flüssigkautschuken **D2** und Core-Shell-Polymeren **D3.**

Vorzugsweise handelt es sich um endständig blockiertes Polyurethanpolymer **D1,** insbesondere um ein Polyurethanpolymer **D1** blockiert mit einer Blockierungsgruppe, welche sich bei einer Temperatur über 100°C abspaltet.

Als Blockierungsgruppe bevorzugt sind insbesondere einerseits Phenole oder Bisphenole zu betrachten. Bevorzugte Bespiele für derartige Phenole und Bisphenole sind insbesondere Phenol, Kresol, Resorcinol, Brenzkatechin, Cardanol (3-Pentadecenylphenol (aus Cashewnuss-Schalen-Öl)), Nonylphenol, mit Styrol oder Dicyclopentadien umgesetzte Phenole, Bis-Phenol-A, Bis-Phenol-F und 2,2'-Diallyl-bisphenol-A.

Die Herstellung des endständig blockierten Polyurethanprepolymers erfolgt aus einem Isocyanatgruppen terminierten linearen oder verzweigten Polyurethanprepolymer mit einer oder mehreren Isocyanat-reaktiven Verbindungen. Falls mehrere derartige Isocyanat-reaktive Verbindungen eingesetzt werden, kann die Reaktion sequentiell oder mit einer Mischung dieser Verbindungen erfolgen.

Die Umsetzung erfolgt bevorzugt so, dass die eine oder die mehreren Isocyanat-reaktiven Verbindungen stöchiometrisch oder im stöchiometrischen Überschuss eingesetzt werden, um zu gewährleisten, dass alle NCO-Gruppen umgesetzt sind.

Das Polyurethanprepolymer mit Isocyanat-Endgruppen, lässt sich aus mindestens einem Diisocyanat oder Triisocyanat sowie aus einem Polymeren **Q_{PM}** mit endständigen Amino-, Thiol- oder Hydroxylgruppen und/oder aus einem, gegebenenfalls substituierten, Polyphenol **Q_{PP}** herstellen.

Geeignete Diisocyanate sind aliphatische, cycloaliphatische, aromatische oder araliphatische Diisocyanate, insbesondere handelsübliche Produkte wie Methylendiphenyldiisocyanat (MDI), Hexamethylendiisocyanat (HDI), Toluoldiisocyanat (TDI), Tolidindiisocyanat (TODI), Isophorondiisocyanat (IPDI), Trimethylhexamethylendiisocyanat (TMDI), 2,5- oder 2,6-Bis-(isocyanatomethyl)-bicyclo[2.2.1]heptan, 1,5-Naphthalindiisocyanat (NDI), Dicyclohexylmethyldiisocyanat (H₁₂MDI), p-Phenylendiisocyanat (PPDI), m-Tetramethylxylylen diisocyanat (TMXDI), etc. sowie deren Dimere. Bevorzugt sind HDI, IPDI, MDI oder TDI.

Geeignete Triisocyanate sind Trimere oder Biurete von aliphatischen, cycloaliphatischen, aromatischen oder araliphatischen Diisocyanaten, insbesondere die Isocyanurate und Biurete der im vorherigen Absatz beschriebenen Diisocyanate. Selbstverständlich können auch geeignete Mischungen von Di- oder Triisocyanaten eingesetzt werden.

Als Polymere **Q_{PM}** mit endständigen Amino-, Thiol- oder Hydroxylgruppen sind insbesondere geeignet Polymere **Q_{PM}** mit zwei oder drei endständigen Amino-, Thiol- oder Hydroxylgruppen.

Die Polymere **Q_{PM}** weisen vorteilhaft ein Equivalenzgewicht von 300 - 6000, insbesondere von 600 - 4000, bevorzugt von 700 - 2200 g/Equivalent NCOreaktiver Gruppen auf.

Als Polymere **Q_{PM}** bevorzugt sind Polyole mit mittleren Molekulargewichten zwischen 600 und 6000 Dalton ausgewählt aus der Gruppe bestehend aus Polyethylenglykolen, Polypropylenglykolen, Polyethylenglykol-Polypropylenglykol-Blockpolymeren, Polybutylenglykolen, hydroxylterminierte Polybutadiene, hydroxylterminierte Butadien-Acrylnitril-Copolymere sowie deren Gemische.

Als Polymere **Q_{PM}** sind insbesondere bevorzugt α,ω-Dihydroxypolyalkylenglykole mit C₂-C₆-Alkylengruppen oder mit gemischten C₂-C₆-Alkylengruppen, die mit Amino-, Thiol- oder, bevorzugt, Hydroxylgruppen terminiert sind. Besonders bevorzugt sind Polypropylenglykole oder Polybutylenglykole. Weiterhin besonders bevorzugt sind Hydroxylgruppen-terminierte Polyoxybutylene.

Als Polyphenol **Q_{PP}** sind insbesondere geeignet Bis-, Tris- und Tetraphenole. Hierunter werden nicht nur reine Phenole, sondern gegebenenfalls auch substituierte Phenole verstanden. Die Art der Substitution kann sehr vielfältig sein. Insbesondere wird hierunter eine Substitution direkt am aromatischen Kern, an den die phenolische OH-Gruppe gebunden ist, verstanden. Unter Phenolen werden weiterhin nicht nur einkernige Aromaten, sondern auch mehrkernige oder kondensierte Aromaten oder Heteroaromaten verstanden, welche die phenolische OH-Gruppe direkt am Aromaten beziehungsweise Heteroaromaten aufweisen.

In einer bevorzugten Ausführungsform wird das Polyurethanprepolymer aus mindestens einem Diisocyanat oder Triisocyanat sowie aus einem Polymeren **Q_{PM}** mit endständigen Amino-, Thiol- oder Hydroxylgruppen hergestellt. Die Herstellung des Polyurethanprepolymers erfolgt in einer dem Polyurethan-Fachmann bekannten Art und Weise, insbesondere, indem das Diisocyanat oder Triisocyanat in einem stöchiometrischen Überschuss in Bezug auf die Amino-, Thiol- oder Hydroxylgruppen des Polymeren **Q_{PM}** eingesetzt wird.
Das Polyurethanprepolymer mit Isocyanatendgruppen weist bevorzugt elastischen Charakter auf. Es zeigt bevorzugt eine Glasumwandlungstemperatur Tg von kleiner als 0°C.

Bei dem Zähigkeitsverbesserer **D** kann es sich um einen Flüssigkautschuk **D2** handeln. Hierbei kann es sich z.B. um ein carboxyl- oder epoxidterminiertes Polymer handeln.

In einer ersten Ausführungsform kann dieser Flüssigkautschuk ein carboxyl- oder epoxidterminiertes Acrylnitril/Butadien-Copolymer oder ein Derivat davon sein. Derartige Flüssigkautschuke sind z.B. unter dem Namen Hypro / Hypox^{®} CTBN und CTBNX und ETBN von Emerald Perfomance Materials, kommerziell erhältlich. Als Derivate sind insbesondere Epoxidgruppen aufweisende Elastomer-modifizierte Prepolymere, wie sie unter der Produktlinie Polydis^{®}, insbesondere aus der Produktelinie Polydis^{®} 36.., von der Firma Struktol^{®} (Schill+Seilacher Gruppe, Deutschland) oder unter der Produktlinie Albipox (Evonik, Deutschland) kommerziell vertrieben werden, geeignet.

In einer zweiten Ausführungsform kann dieser Flüssigkautschuk ein Polyacrylatflüssigkautschuk sein, der mit flüssigen Epoxidharzen vollständig mischbar ist und sich erst beim Aushärten der Epoxidharzmatrix zu Mikrotröpfchen entmischt. Derartige Polyacrylatflüssigkautschuke sind z.B. unter der Bezeichnung 20208-XPA von Dow erhältlich.

Es können natürlich auch Mischungen von Flüssigkautschuken verwendet werden, insbesondere Mischungen von carboxyl- oder epoxidterminierten Acrylnitril/Butadien-Copolymeren oder von Derivaten davon.

Der Zähigkeitsverbesserer **D** kann in einer dritten Ausführungsform ein Core-Shell Polymer **D3** sein. Core-Shell-Polymere bestehen aus einem elastischen Kernpolymer und einem starren Schalen-Polymer. Besonders geeignete Core-Shell-Polymere bestehen aus einem Kern (Core) aus elastischem Acrylat- oder Butadien-Polymer, den eine starre Schale (Shell) eines starren thermoplastischen Polymers umhüllt. Diese Core-Shell Struktur bildet sich entweder spontan durch Entmischen eines Blockcopolymeren oder ist durch die Polymerisationsführung als Latex oder Suspensions-polymerisation mit nachfolgender Pfropfung vorgegeben. Bevorzugte Core-Shell-Polymere sind sogenannte MBS Polymere, welche kommerziell unter dem Handelsnamen Clearstrength^{™} von Arkema, Paraloid^{™} von Dow oder F-351^{™} von Zeon erhältlich sind.

In einer weiteren bevorzugten Ausführungsform enthält die einkomponentige hitzehärtende Epoxidharzzusammensetzung zusätzlich mindestens einen Füllstoff **F.** Bevorzugt handelt es sich hierbei um Glimmer, Talk, Kaolin, Wollastonit, Feldspat, Syenith, Chlorit, Bentonit, Montmorillonit, Calciumcarbonat (gefällt oder gemahlen), Dolomit, Quarz, Kieselsäuren (pyrogen oder gefällt), Cristobalit, Calciumoxid, Aluminiumhydroxid, Magnesiumoxid, Keramikhohlkugeln, Glashohlkugeln, organische Hohlkugeln, Glaskugeln, Farbpigmente. Besonders bevorzugt handelt es sich um Füllstoffe ausgewählt aus der Gruppe bestehend aus Calciumcarbonat, Calciumoxid und pyrogene Kieselsäuren.

Vorteilhaft beträgt der Gesamtanteil des gesamten Füllstoffs **F** 5 - 40 Gewichts-%, vorzugsweise 10 - 30 Gewichts-%, bezogen auf das Gesamtgewicht der einkomponentigen hitzehärtenden Epoxidharzzusammensetzung.

Die Zusammensetzung kann weitere Bestandteile, insbesondere Katalysatoren, Stabilisatoren, insbesondere Hitze- und/oder Lichtstabilisatoren, Thixotropiermittel, Weichmacher, Lösungsmittel, mineralische oder organische Füllstoffe, Treibmittel, Farbstoffe und Pigmente, Korrosionsschutzmittel, tenside, Entschäumer und Haftvermittler umfassen.

Als Weichmacher eignen sich insbesondere Phenol-Alkylsulfonsäureester oder Benzolsulfonsäure-N-butylamid, wie sie als Mesamoll^{®} bzw. Dellatol BBS von Bayer kommerziell erhältlich sind.

Als Stabilisatoren eignen sich insbesondere gegebenenfalls substituierte Phenole, wie BHT oder Wingstay^{®} T (Elikem), sterisch gehinderte Amine oder N-Oxylverbindungen wie TEMPO (Evonik).

Eine besonders bevorzugte einkomponentige Epoxidharzzusammensetzung umfasst:
- 10 - 60 Gew.-%, vorzugsweise 25 - 55 Gew.-%, 30 - 55 Gew.-%, 35 - 55 Gew.-%, insbesondere 40 - 50 Gew.-%, bezogen auf das Gesamtgewicht der Epoxidharzzusammensetzung, Epoxidharz **A** mit durchschnittlich mehr als einer Epoxidgruppe pro Molekül; vorzugsweise beträgt, bezogen auf das Gesamtgewicht des Epoxidharz **A:**
   - der Anteil an Epoxid-Flüssigharz **A1** 20 - 100 Gew.-%, 30 - 100 Gew.-%, 30 - 95 Gew.-%, 30 - 90 Gew.-%, 30 - 80 Gew.-%, 30 - 70 Gew.-%, insbesondere 30 - 60 Gew.-%;
   - der Anteil an Epoxid-Festharz **A2** 0 - 70 Gew.-%, 10 - 70 Gew.-%, 20 - 70 Gew.-%, 30 - 70 Gew.-%, 40 - 70 Gew.-%, 40 - 65 Gew.-%, insbesondere 50 - 65 Gew.-%;
   - der Anteil an Epoxidgruppen-tragenden Reaktivverdünnern **A3** 0 - 50 Gew.-%, 1 - 20 Gew.-%, 2 - 10 Gew.-%, 3 - 7.5 Gew.-%, insbesondere 4 - 6 Gew.-%;
- mindestens einen latenten Härter für Epoxidharze **B,** vorzugsweise ausgewählt aus Dicyandiamid, Guanaminen, Guanidinen, Anhydriden von mehrwertigen Carbonsäuren, Dihydraziden, und Aminoguanidinen, sowie deren Derivaten, wobei Dicyandiamid bevorzugt ist;
- vorzugsweise mindestens einen Beschleuniger **C,** ausgewählt aus der Liste bestehend aus substituierten Harnstoffen, Imidazolen, Imidazolinen und blockierten Aminen, insbesondere ausgewählt ist aus der Liste bestehend aus substituierten Harnstoffen und blockierten Aminen, insbesondere bevorzugt substituierten Harnstoffen;
- mindestens einen Zähigkeitsverbesserer **D,** ausgewählt ist aus der Gruppe bestehend aus endständig blockierten Polyurethanpolymeren **D1,** Flüssigkautschuken **D2** und Core-Shell-Polymeren **D3,** vorzugsweise ein endständig blockiertes Polyurethanpolymer D1, wobei dabei der Anteil an Zähigkeitsverbesserer **D** 10 - 40 Gew.-%, insbesondere 20 - 30 Gew.-%, beträgt, bezogen auf das Gesamtgewicht der Epoxidharzzusammensetzung;
- 4 - 12 Gew.-%, vorzugsweise 5 - 10 Gew.-%, 6 - 9 Gew.-%, insbesondere 7 - 8 Gew.-%, bezogen auf das Gesamtgewicht der Epoxidharzzusammensetzung, von mindestens einem bei Raumtemperatur festen kristallinen Polyesterpolyol **PP,** vorzugsweise mit einen Schmelzpunkt von 50 bis 110 °C, insbesondere 70 bis 95 °C, besonders bevorzugt 80 bis 90 °C, vorzugsweise mit einem DSC-Gerät (DIN 53 765) bestimmt;
- vorzugsweise 5 - 40 Gewichts-%, vorzugsweise 10 - 30 Gewichts-%, bezogen auf das Gesamtgewicht der Epoxidharzzusammensetzung, von einem Füllstoffe **F** ausgewählt vorzugsweise aus der Gruppe bestehend aus Wollastonit, Calciumcarbonat, Farbpigmenten, insbesondere Russ, und pyrogene Kieselsäuren, insbesondere Farbpigmenten, insbesondere Russ, und pyrogene Kieselsäuren, besonders bevorzugt pyrogene Kieselsäuren.

Vorzugsweise beträgt das Gewichtsverhältnis von Epoxid-Flüssigharz **A1** zu Epoxid-Festharz **A2 (A1/A2)** von 0.25 - 3.75, insbesondere von 0.4 - 3.5.

Vorzugsweise beträgt das Gewichtsverhältnis von Epoxidharz **A** mit durchschnittlich mehr als einer Epoxidgruppe pro Molekül zu bei Raumtemperatur festem kristallinen Polyesterpolyol **PP (A/PP)** von 3 - 15, 4 - 12, 4.5 -10, 5 - 8, insbesondere von 6 - 7, beträgt.

Weiter kann es vorteilhaft sein, wenn die bevorzugte einkomponentige Epoxidharzzusammensetzung zu mehr als 80 Gewichts-%, vorzugsweise mehr als 90 Gewichts-%, insbesondere mehr als 95 Gewichts-%, insbesondere bevorzugt mehr als 98 Gewichts-%, am meisten bevorzugt mehr als 99 Gewichts-%, bezogen auf das Gesamtgewicht der Epoxidharzzusammensetzung, aus den vorgenannten Bestandteilen besteht.

Beispiele von besonders bevorzugten Zusammensetzungen sind beispielsweise E2 und E6, insbesondere E6, in Tabelle 1.

Weiter kann es vorteilhaft sein, wenn die erfindungsgemässen Zusammensetzungen weniger als 5 Gew.-%, insbesondere weniger als weniger als 2, weniger als 1 Gew.-%, bevorzugt weniger als 0.5 Gew.-%, besonders bevorzugt weniger als 0.3 Gew.-%, weniger als 0.2 Gewichts-%, weniger als 0.1 Gewichts-%, insbesondere weniger als 0.05 Gewichts-%, an den folgenden Komponenten aufweist, bezogen auf das Gesamtgewicht der Epoxidharzzusammensetzung:
- Polyesterpolyole, welche nicht zu den vorgenannten bei Raumtemperatur festen kristallinen Polyesterpolyol **PP** gehören und nicht Teil von Polymeren sind, insbesondere bei Raumtemperatur flüssige Polyesterpolyole und amorphe Polyesterpolyole;

Es ist vorteilhaft, wenn die erfindungsgemässe Epoxidharzzusammensetzung eine Viskosität bei 80°C von < 80 Pa*s, insbesondere < 50 Pa*s, 10 - 45 Pa*s, insbesondere 15 - 40 Pa*s, vorzugsweise 15 - 35 Pa*s, aufweist. Dies ist dahingehend von Vorteil, dass dadurch eine gute Applizierbarkeit in Sprühverfahren gewährleistet ist. Vorzugsweise wird die Viskosität gemessen wie in dem Beispielteil beschrieben.

Auch ist es von Vorteil, wenn bei der erfindungsgemässen Epoxidharzzusammensetzung im unausgehärteten Zustand eine maximale Verpresskraft von > 200 N, insbesondere > 250 N, 300 - 3000 Pa*s, insbesondere 400 - 2500 Pa*s, vorzugsweise 500 - 2000 Pa*s, aufweist. Vorzugsweise wird die maximale Verpresskraft gemessen wie in dem Beispielteil beschrieben.

Besonders bevorzugt handelt es sich um hitzehärtende Epoxidharzzusammensetzungen, welche im ausgehärteten Zustand:
- eine Zugscherfestigkeit, insbesondere gemessen nach DIN EN 1465, besonders bevorzugt wie in dem Beispielteil beschrieben, von mehr als 15 MPa, mehr als 20 MPa, mehr als 25 MPa, aufweisen, und/oder
- eine Zugfestigkeit, insbesondere gemessen nach DIN EN ISO 527, besonders bevorzugt wie in dem Beispielteil beschrieben, von mehr als 15 MPa, mehr als 18 MPa, mehr als 20 MPa, aufweisen, und/oder
- eine Bruchdehnung, insbesondere gemessen nach DIN EN ISO 527, besonders bevorzugt wie in dem Beispielteil beschrieben, von 5 - 70 %, 8 - 50 %, 10 - 40 %, aufweisen, und/oder
- ein E-Modul, insbesondere gemessen nach DIN EN ISO 527, besonders bevorzugt wie in dem Beispielteil beschrieben, von 800 - 1500 MPa, vorzugsweise 1000 - 1500 MPa, aufweisen, und/oder
- eine Schlagschälfestigkeit bei 23 °C, insbesondere gemessen nach ISO 11343, besonders bevorzugt wie in dem Beispielteil beschrieben, von mehr als 25 N/mm, mehr als 30 N/mm, mehr als 32 N/mm, aufweisen, und/oder
- eine Schlagschälfestigkeit bei -30 °C, insbesondere gemessen nach ISO 11343, besonders bevorzugt wie in dem Beispielteil beschrieben, von mehr als 5 N/mm, mehr als 10 N/mm, mehr als 15 N/mm, mehr als 20 N/mm, aufweisen.

Die einkomponentige hitzehärtende Epoxidharzzusammensetzung wird in einem ersten Schritt (a) des erfindungsgemässen Verfahrens auf ein Innenblech oder ein Aussenblech aufgetragen. Dies erfolgt vorteilhaft bei einer Applikationstemperatur der Epoxidharzzusammensetzung von 50°C bis 90°C, insbesondere von 60°C und 80°C, bevorzugt von 65°C bis 75°C.

Der Auftrag der Epoxidharzzusammensetzung erfolgt typischerweise im Randbereich des Aussenbleches. Die Menge und genaue Applikationsstelle der Epoxidharzzusammensetzung ist derart, dass nach dem weiter unten beschriebenen Verpressen der Bördelfalz möglichst vollständig mit Epoxidharzzusammensetzung gefüllt ist.
Der Auftrag erfolgt vorzugsweise automatisch.
Es ist weiter vorteilhaft, wenn der Auftrag mittels Sprühapplikation erfolgt. Vorzugsweise erfolgt der Auftrag in Form mindestens eines Streifens, insbesondere mit im Wesentlichen rechteckigen Querschnitts. Vorzugsweise weist der Streifen folgende Dimensionen auf:
- eine Länge von 1 - 100 cm, insbesondere 5 - 50 cm,
- eine Dicke von 0.2 - 2 mm, insbesondere 0.3 - 1.5 mm, 0.3 - 1.0 mm, besonderes bevorzugt 0.4 - 0.6 mm,
- eine Breite von 5 - 50 mm, insbesondere 10 - 40 mm, 15 - 35 mm, besonderes bevorzugt 20 - 25 mm.

Vorzugsweise erfolgt der Auftrag nicht in Form einer Klebstoffraupe.

In einem zweiten Schritt (b) des erfindungsgemässen Verfahrens wird dann die Epoxidharzzusammensetzung mit dem Innenblech oder dem Aussenblech kontaktiert. Damit stehen nun Innenblech und Aussenblech mit der Epoxidharzzusammensetzung in Kontakt.

Selbstverständlich ist es auch möglich, dass mehrere Innenbleche, welche miteinander unter Wiederholung der Schritte a) und b) miteinander verklebt werden, für die Herstellung eines Bördelfalzes verwendet werden können.

In einem dritten Schritt (c) des erfindungsgemässen Verfahrens wird das Aussenblech um das Innenblech gebördelt, so dass im Innenraum des so gebildeten Falzes Epoxidharzzusammensetzung vorhanden ist.

In einem vierten Schritt (d) des erfindungsgemässen Verfahrens wird nun der Bördelfalz verpresst.

Vorzugsweise wird in im Schritt d) die Epoxidharzzusammensetzung im Bördelfalz auf eine Epoxidharzzusammensetzungsdicke (dₓ) verpresst, welche 100 - 50%, insbesondere 100 - 60%, 100 - 70%, insbesondere 90 - 80%, der Dicke (d_{y}) der in Schritt a) applizierten Epoxidharzzusammensetzung entspricht.

Vorzugsweise beträgt die Epoxidharzzusammensetzungsdicke (dₓ) 0.2 - 2 mm, insbesondere 0.3 - 1.5 mm, 0.3 - 1.0 mm, besonderes bevorzugt 0.4 - 0.6 mm.

Vorzugsweise wird in im Schritt d) keine Epoxidharzzusammensetzung aus der Bördelfalznaht ausgepresst.

Als Innenblech und Aussenblech sind grundsätzlich alle die vom Fachmann bekannten Bleche geeignet. Insbesondere sind dies diejenigen Blechmaterialien, welche für die Bördelfalzverklebung bereits im Transportmittelbau oder in der Herstellung von Weisswaren benutzt werden.

Bevorzugte Bleche sind aus Stahl, insbesondere elektrolytisch verzinkter, feuerverzinkter, beölter Stahl, Bonazink-beschichteter Stahl, und nachträglich phosphatierter Stahl, sowie Aluminium insbesondere in den im Autobau typischerweise vorkommenden Varianten.

Das Bördeln und Verpressen erfolgt mit dem Fachmann bekannten Werkzeugen.

In einem weiteren Schritt (e) des erfindungsgemässen Verfahrens wird thermischer Energie in die Epoxidharzzusammensetzung eingeführt. Das Zuführen der thermischen Energie bewirkt das Vernetzen der einkomponentigen hitzehärtenden Epoxidharzzusammensetzung, bzw. beschleunigt deren Vernetzen, so dass möglichst schnell eine genügend hohe Festigkeit der Bördelfalzverklebung erzielt wird.

Somit schliesst vorzugsweise anschliessend an Schritt e) ein Schritt f) des Vernetzens der Epoxidharzzusammensetzung an.

In einer besonders bevorzugten Ausführungsform erfolgt anschliessend an den Schritt des Verpressens (d) oder an den Schritt des Einführens von thermischer Energie (e) ein Schritt (g) des Abdichtens der Bördelfalznaht mittels eines Dichtstoffes. Der Dichtstoff hat einerseits die Funktion die Bördelfalznaht optisch sauber zu gestalten, da sie vielfach optisch sichtbar ist, und andererseits die Naht abzudichten. Es ist bevorzugt, dass im Bördelfalz möglichst keine Luftblasen vorhanden sind und der Zwischenraum zwischen Aussen- und Innenblech möglichst vollständig mit Epoxidharzzusammensetzung und/oder Dichtstoff gefüllt ist.

Als Dichtstoff können für die Bördelfalznahtabdichtung oder -versiegelung bereits bekannte Dichtstoffe eingesetzt werden. Der Dichtstoff kann in einer Ausführungsform durch UV-Licht vorverhärtet, bzw. ausgehärtet, werden. In einer weiteren Ausführungsform wird der Dichtstoff ebenfalls über das Zuführen von thermischer Energie vernetzt, bzw. beschleunigt. Es erfolgt somit nach dem Schritt g) vorteilhaft ein weiterer Schritt (h) des Einführens thermischer Energie in den Dichtstoff.

Als Dichtstoffe eignen sich einkomponentige Dichtstoffe, welche hitze- oder UVhärtend sind oder bei Raumtemperatur härtende oder vorverhärtende zweikomponentige Epoxidharz- oder Polyurethan- oder (Meth)acrylatdichtstoffe oder vulkanisierbare Kautschukdichtstoffe. Es ist wichtig bei diesen Dichtstoffen, dass sie ihre Dichtfunktion gut erfüllen und vorteilhaft elastisch sind.

Es hat sich als besonders bevorzugt herausgestellt, wenn der Dichtstoff zusammen mit der Epoxidharzzusammensetzung durch thermische Energie vernetzt wird. Die thermische Energie wird insbesondere über Infrarotstrahlung oder Induktionsheizung in die Epoxidharzzusammensetzung eingebracht.

Es ist vorteilhaft, wenn durch die Einführung von thermische Energie die einkomponentige hitzehärtende Epoxidharzzusammensetzung auf eine Temperatur von 100 - 220 °C, vorzugsweise 120 - 200°C aufgeheizt wird.
Die endgültige Vernetzung kann auch im KTL-Ofen erfolgen.

Ein weiterer Aspekt der Erfindung betrifft eine Bördelfalzverklebung, welche nach dem vorgängig beschriebenen Verfahren hergestellt wird.

Weiterhin betrifft die Erfindung die Verwendung des vorgängig beschriebenen Verfahrens zur Herstellung von Bördelfalzverklebungen in der Herstellung von Transportmitteln, insbesondere von Automobilen, Bussen, Lastkraftwagen, Schienenfahrzeugen, Schiffen oder Luftfahrzeugen, oder Weisswaren, insbesondere Waschmaschinen, Tumbler oder Geschirrspülern.

Ein weiterer Aspekt der Erfindung betrifft ein Bördelfalz-Klebverbundkörper, welcher ein gebördeltes Aussenblech, ein Innenblech und eine vernetzte einkomponentige hitzehärtende Epoxidharzzusammensetzung, wie vorgängig beschrieben, die zwischen der nicht gebogenen Innenflanke des Aussenbleches und dem Innenblech angeordnet ist.

Schliesslich wird in einem weiteren Aspekt der Erfindung ein Artikel, welcher eine beschriebene Bördelfalzverklebung aufweist, beansprucht

Derartige Artikel oder Bördelfalz-Klebverbundkörper sind insbesondere Transportmittel, insbesondere ein Automobil, Bus, Lastkraftwagen, Schienenfahrzeug, ein Schiff oder ein Luftfahrzeug ist, oder eine Weissware, insbesondere eine Waschmaschine, Tumbler oder Geschirrspüler.

### Beispiele

Im Folgenden werden einige Beispiele aufgeführt, welche die Erfindung weiter veranschaulichen, den Umfang der Erfindung aber in keiner Weise beschränken sollen.

### Herstellung eines Zähigkeitsverbesserers ("D-1")

150 g Poly-THF 2000 (OH-Zahl 57 mg/g KOH) und 150 Liquiflex H (OH-Zahl 46 mg/g KOH) wurden 30 Minuten unter Vakuum bei 105°C getrocknet. Nachdem die Temperatur auf 90°C reduziert worden war, wurden 61.5 g IPDI und 0.14 g Dibutylzinndilaurat zugegeben. Die Reaktion wurde unter Vakuum bei 90°C bis zur Konstanz des NCO-Gehaltes bei 3.10% nach 2.0 h geführt (berechneter NCO-Gehalt: 3.15%). Anschliessend wurden 96.1 g Cardanol als Blockierungsmittel zugegeben. Es wurde bei 105°C unter Vakuum weitergerührt bis kein freies NCO mehr nachgewiesen werden konnte. Das Produkt wurde so als Zähigkeitsverbesserer ***D-1*** verwendet.

| | |
|---|---|
| A-Harz flüssig | Epoxid-Flüssigharz, D.E.R. 331 (Bisphenol-A-diglycidylether), Dow |
| A-Harz fest | Epoxid-Festharz, (Bisphenol-A-diglycidylether-basiert), Dow |
| Reaktivverdünner | Reaktivverdünner, Hexandiol-glycidylether, Denacol EX-212, Nagase America |
| Dynacol 7130 | Amorphes Polyesterpolyol, Dynacol 7130, Evonik |
| Dynacol 7150 | Amorphes Polyesterpolyol, Dynacol 7150, Evonik |
| Fineplus HM 3123 | Bei Raumtemperatur festes kristallines Polyesterpolyol, Schmelzpunkt 85 °C, Hydroxyzahl 28-32, Fineplus HM 3123, Dic Performance Resins |
| Harnstoff | N,N-Dimethylharnstoff (=1,1-Dimethylharnstoff), Sigma-Aldrich, Schweiz |
| Dicy | Dicyandiamid, Dyhard 100 SF (mittlere Partikelgrösse D₅₀ von 2-3 µm), AlzChem |
| Füllstoff | Gemisch aus Calciumcarbonat, Calciumoxid, pyrogene Kieselsäure |
| | Poly-THF 2000 (Difunktionelles Polybutylenglykol) |
| | (OH-Equivalentgewicht = ca. 1000 g/OH-Equivalent), BASF |
| | Liquiflex H (Hydroxylterminertes Polybutadien) (OH-Equivalentgewicht = ca. 1230 g/OH-Equivalent), Krahn |
| | Isophoron-diisocyanat (= *"IPDI"*), Evonik |
| | Cardolite NC-700 (Cardanol, meta-substituiertes Alkenyl-mono-Phenol), Cardolite |

Eingesetzte Rohstoffe.

### Herstellung der Zusammensetzungen

Es wurden gemäss Angaben in der Tabelle 1 die Referenzzusammensetzungen Ref.1 - Ref.5 sowie die erfindungsgemässen Zusammensetzungen E1 bis E7 hergestellt. Die Mengenangaben in der Tabelle 1 sind in Gewichtsteilen.

### Prüfmethoden:

### Zugfestigkeit (ZF), Bruchdehnung und E-Modul (DIN EN ISO 527)

Eine Klebstoffprobe wurde zwischen zwei Teflonpapieren auf eine Schichtdicke von 2mm verpresst. Nach 35 min Aushärtung bei 175°C wurden die Teflonpapiere entfernt und die Probekörper nach DIN-Norm wurden ausgestanzt. Die Prüfkörper wurden unter Normklima mit einer Zuggeschwindigkeit von 2 mm/min gemessen. Die Zugfestigkeit (ZF), Bruchdehnung und das E-Modul 0,05-0,25%, wurden gemäss DIN EN ISO 527 bestimmt.

### Zugscherfestigkeit (DIN EN 1465)

Gereinigte und mit Anticorit PL 3802-39S rückbeölte Prüfbleche von Stahl Elo H420 (Dicke 1,5mm) wurden auf einer Klebfläche von 25 x 10mm mit Glaskugeln als Abstandshalter in einer Schichtdicke von 0,3 mm mit dem Klebstoff verklebt und für 10 min bei 140°C Ofentemperatur ausgehärtet.

Die Zugscherfestigkeit wurde auf einer Zugmaschine bei einer Zuggeschwindigkeit von 10mm/min in einer 3-fach Bestimmung gemäss DIN EN 1465 bestimmt.

### Schlagschälfestigkeit (Impact peel) (gemäss ISO 11343)

Die Probenkörper wurden mit dem Klebstoff und Stahl DC04+ZE mit dem Mass 90 x 20 x 0,8mm hergestellt. Dabei betrug die Klebfläche 20 x 30mm bei einer Schichtdicke von 0,3mm und Glaskugeln als Abstandshalter. Die Proben wurden für 10 min bei 140°C Ofentemperatur ausgehärtet. Die Messung der Schlagschälfestigkeit erfolgte bei 23°C (Impact Peel 23°C) oder bei -30°C (Impact Peel -30°C) als Dreifachbestimmung auf einem Zwick 450 Schlagpendel. Als Schlagschälfestigkeit, wird die gemittelte Kraft in N/mm unter der Messkurve von 25% bis 90% gemäss ISO11343 angegeben.

### Viskosität

Viskositätsmessungen an den Klebstoffen erfolgten 1d nach Herstellung auf einem Rheometer vom Typ MCR 101 des Herstellers Anton Paar oszillatorisch unter Verwendung einer Platten-Platten Geometrie bei einer Temperatur von 80°C mit folgenden Parametern: 5 Hz, 1 mm Messspalt, Platte-Platte-Durchmesser 25 mm, 1% Deformation. Die Messung wird in Tabelle 1 unter "Viskosität 80°C" ausgewiesen.

### Maximale Verpresskraft

Auf einen PVC-Träger wurden ausgestanzte Proben der Zusammensetzungen (im unausgehärteten Zustand) in zylindrischer Form (Durchmesser 25 mm bei einer Dicke von 2 mm) aufgebracht. Die Messung der maximalen Verpresskraft erfolgte (im unausgehärteten Zustand) bei 23°C mit einer Zugmaschine (Zwick mit 10kN Kraftmessdose) bei einer Druckgeschwindigkeit von 10 mm/min in einer 3-fach Bestimmung. Gemessen wurde die maximale Kraft, die nötig war, um die gemessene Probe von ihrer Dicke von 2 mm auf eine Dicke von 0.4 mm zu verpressen.

**Tabelle 1, n.b. = nicht bestimmt**

| | Ref.1 | Ref.2 | Ref.3 | Ref.4 | Ref.5 | E1 | E2 | E3 | E4 | E5 | E6 | E7 |
|---|---|---|---|---|---|---|---|---|---|---|---|---|
| A-Harz flüssig | 45 | 45 | 45 | 45 | 45 | 45 | 45 | 45 | 35 | 25 | 15 | 5 |
| A-Harz fest | | | | | | | | | 10 | 20 | 30 | 40 |
| Reaktivverdünner | 2.4 | 2.4 | 2.4 | 2.4 | 2.4 | 2.4 | 2.4 | 2.4 | 2.4 | 2.4 | 2.4 | 2.4 |
| D-1 | 22 | 22 | 22 | 22 | 22 | 22 | 22 | 22 | 22 | 22 | 22 | 22 |
| Dynacol 7130 | | 7.5 | | | | | | | | | | |
| Dynacol 7150 | | | 7.5 | 10 | | | | | | | | |
| Finplus HM 3123 | | | | | 2 | 5 | 7.5 | 10 | 7.5 | 7.5 | 7.5 | 7.5 |
| Füllstoffe | 26.3 | 18.8 | 18.8 | 16.3 | 24.3 | 21.3 | 18.8 | 16.3 | 19.32 | 19.32 | 20.48 | 21 |
| Dicy | 4.1 | 4.1 | 4.1 | 4.1 | 4.1 | 4.1 | 4.1 | 4.1 | 3.6 | 3.6 | 2.5 | 2.0 |
| Harnstoff | 0.2 | 0.2 | 0.2 | 0.2 | 0.2 | 0.2 | 0.2 | 0.2 | 0.18 | 0.18 | 0.12 | 0.1 |
| Summe (Gew.-%) | 100 | 100 | 100 | 100 | 100 | 100 | 100 | 100 | 100 | 100 | 100 | 100 |
| | | | | | | | | | | | | |
| E-Modul (MPa) | 1000 | 1470 | 1410 | 1430 | 1150 | 1180 | 1190 | 1250 | 1350 | 1320 | 1390 | 1290 |
| Bruchdehnung (%) | 9.5 | 8 | 7 | 7 | 13 | 8 | 14 | 12 | 11 | 13 | 26 | 60 |
| Zugfestigkeit (%) | 21 | 26 | 26 | 26 | 23 | 20 | 21.5 | 21 | 22 | 22 | 24 | 21 |
| Zugscherfestigkeit H420 (MPa) | 29.9 | 28.1 | 28.1 | 26.8 | 28.0 | 28.7 | 25.7 | 19.1 | 24.6 | n.b. | 27.6 | 25.6 |
| Impact Peel 23°C DC04 (N/mm) | 32.2 | 21.7 | 21.4 | 22.9 | 33.6 | 32.1 | 34.2 | 28.6 | 27.6 | 30.5 | 33.1 | 28.6 |
| Impact Peel -30°C DC04 (N/mm) | 28.2 | 15.8 | 13.3 | 15.2 | 25.7 | 22.7 | 21.2 | 16.0 | 14.0 | n.b. | 12.8 | 6.5 |
| Viskosität 80°C (Pas) | 35 | 20 | 21 | 25 | 26 | 24 | 16 | 16 | 19 | 30 | 40 | 74 |
| Verpresskraft (N) | 113 | 85 | 117 | 97 | 89 | 237 | 309 | 460 | 462 | 585 | 1303 | 1936 |
| Ration A1/A2 | - | - | - | - | - | - | - | - | 3.5 | 1.75 | 0.5 | 0.125 |
| Ration A/PP | - | - | - | - | 23.7 | 9.48 | 6.32 | 4.74 | 6.32 | 6.32 | 6.32 | 6.32 |

## Patentansprüche

1. Verfahren zur Herstellung einer Bördelfalzverklebung umfassend mindestens die Schritte
a) Applikation einer einkomponentigen hitzehärtenden Epoxidharzzusammensetzung auf ein Innenblech oder auf ein Aussenblech;
b) Kontaktieren der einkomponentigen hitzehärtenden Epoxidharzzusammensetzung mit dem Innenblech oder dem Aussenblech;
c) Bördeln des Aussenbleches um das Innenblech, so dass im Innenraum des Bördelfalzes die einkomponentige hitzehärtende Epoxidharzzusammensetzung vorhanden ist;
d) Verpressen des Bördelfalzes;
e) Einführen thermischer Energie in die einkomponentige hitzehärtende Epoxidharzzusammensetzung,
wobei die einkomponentige hitzehärtende Epoxidharzzusammensetzung umfasst:
- 20 - 60 Gew.-%, bezogen auf das Gesamtgewicht der einkomponentigen hitzehärtenden Epoxidharzzusammensetzung, von mindestens einem Epoxidharz **A** mit durchschnittlich mehr als einer Epoxidgruppe pro Molekül, enthaltend mindestens ein Epoxid-Flüssigharz **A1,** vorzugsweise mindestens ein Epoxid-Festharz **A2,** sowie vorzugsweise mindestens einen Epoxidgruppen-tragenden Reaktivverdünner **A3,** wobei der Anteil an Epoxid-Flüssigharz **A1** 10 - 100 Gew.-%, bezogen auf das Gesamtgewicht des Epoxidharz **A,** beträgt;
- mindestens einen latenten Härter für Epoxidharze **B;**
- 10 - 40 Gew.-%, insbesondere 20 - 30 Gew.-%, bezogen auf das Gesamtgewicht der einkomponentigen hitzehärtenden Epoxidharzzusammensetzung, von mindestens einem Zähigkeitsverbesserer **D** ausgewählt aus der Gruppe bestehend aus endständig blockierten Polyurethanpolymeren **D1,** Flüssigkautschuken **D2** und Core-Shell-Polymeren **D3,** vorzugsweise handelt es sich um endständig blockiertes Polyurethanpolymer **D1;**
- 4 - 12 Gew.-%, bezogen auf das Gesamtgewicht der einkomponentigen hitzehärtenden Epoxidharzzusammensetzung, von mindestens einem bei Raumtemperatur festen kristallinen Polyesterpolyol **PP.**

2. Verfahren nach Anspruch 1, wobei der Anteil von mindestens einem bei Raumtemperatur festen kristallinen Polyesterpolyol **PP** 5 - 10 Gew.-%, 6 - 9 Gew.-%, insbesondere 7 - 8 Gew.-%, bezogen auf das Gesamtgewicht der einkomponentigen hitzehärtenden Epoxidharzzusammensetzung, beträgt.

3. Verfahren nach einem der vorgehenden Ansprüche, wobei das bei Raumtemperatur feste kristalline Polyesterpolyol **PP** einen Schmelzpunkt von 50 bis 110 °C, insbesondere 70 bis 95 °C, besonders bevorzugt 80 bis 90 °C, aufweist, vorzugsweise bestimmt mit einem DSC-Gerät gemäss DIN 53 765.

4. Verfahren nach einem der vorgehenden Ansprüche, wobei das Gewichtsverhältnis von Epoxidharz **A** mit durchschnittlich mehr als einer Epoxidgruppe pro Molekül zu bei Raumtemperatur festem kristallinen Polyesterpolyol **PP (A/PP)** von 3 - 15, 4 - 12, 4.5 -10, 5 - 8, insbesondere von 6-7, beträgt.

5. Verfahren nach einem der vorgehenden Ansprüche, wobei das Gewichtsverhältnis von Epoxid-Flüssigharz **A1** zu Epoxid-Festharz **A2** von 0.25 - 3.75, insbesondere 0.4 - 3.5, beträgt.

6. Verfahren nach einem der vorgehenden Ansprüche, wobei das Gewichtsverhältnis von Epoxid-Flüssigharz **A1** zu Epoxid-Festharz **A2** von 0.25 - 3.75, 0.4 - 3.5, 0.5 -3.0, 0.75 -2.5, insbesondere 1.0 - 2.0, beträgt.

7. Verfahren nach einem der vorgehenden Ansprüche, wobei das Gewichtsverhältnis von Epoxid-Flüssigharz **A1** zu Epoxid-Festharz **A2** von 0.25 - 3.75, 0.4 - 3.5, 0.4 -3.0, 0.4 -2.5, 0.4 - 2.0, 0.4 - 1.5, 0.4 - 1.0, insbesondere 0.4 - 0.75, beträgt.

8. Verfahren nach einem der vorgehenden Ansprüche, wobei der latente Härter für Epoxidharze **B** ausgewählt ist aus Dicyandiamid, Guanaminen, Guanidinen, Anhydriden von mehrwertigen Carbonsäuren, Dihydraziden, und Aminoguanidinen, wobei Dicyandiamid bevorzugt ist.

9. Verfahren nach einem der vorgehenden Ansprüche, wobei die hitzehärtende Epoxidharzzusammensetzung zusätzlich mindestens einen Beschleuniger **C** ausgewählt aus der Liste bestehend aus substituierten Harnstoffen, Imidazolen, Imidazolinen und blockierten Aminen, insbesondere substituierten Harnstoffen, aufweist.

10. Verfahren nach einem der vorgehenden Ansprüche, wobei die hitzehärtende Epoxidharzzusammensetzung zusätzlich mindestens einen Füllstoff **F** aufweist, insbesondere beträgt Anteil des gesamten Füllstoffs **F** 5 - 40 Gewichts-%, vorzugsweise 10 - 30 Gewichts-%, bezogen auf das Gesamtgewicht der einkomponentigen hitzehärtenden Epoxidharzzusammensetzung.

11. Verfahren nach einem der vorgehenden Ansprüche, wobei die hitzehärtende Epoxidharzzusammensetzung eine Viskosität bei 80°C von < 80 Pa*s, insbesondere < 50 Pa*s, 10 - 45 Pa*s, insbesondere 15 - 40 Pa*s, vorzugsweise 15 - 35 Pa*s, aufweist, insbesondere gemessen mit Rheometer oszillatorisch unter Verwendung einer Platten-Platten Geometrie mit folgenden Parametern: 5 Hz, 1 mm Messspalt, Platte-Platte-Durchmesser 25 mm, 1% Deformation.

12. Verfahren nach einem der vorgehenden Ansprüche, **dadurch gekennzeichnet**, in Schritt a) die Applikationstemperatur der einkomponentigen hitzehärtenden Epoxidharzzusammensetzung von 50°C bis 90°C, insbesondere von 60°C und 80°C, bevorzugt von 65°C bis 75°C, beträgt.

13. Verfahren nach einem der vorgehenden Ansprüche, **dadurch gekennzeichnet**, in Schritt a) die einkomponentigen hitzehärtenden Epoxidharzzusammensetzung durch Sprühapplikation appliziert wird, vorzugsweise in Form mindestens eines Streifens, insbesondere weist der mindestens eine Streifen folgende Dimensionen auf:
- eine Länge von 1 - 100 cm, insbesondere 5 - 50 cm,
- eine Dicke von 0.2 - 2 mm, insbesondere 0.3 - 1.5 mm, 0.3 - 1.0 mm, besonderes bevorzugt 0.4 - 0.6 mm,
- eine Breite von 5 - 50 mm, insbesondere 10 - 40 mm, 15 - 35 mm, besonderes bevorzugt 20 - 25 mm.

14. Bördelfalzverklebung, hergestellt in einem Verfahren gemäss einem der Ansprüche 1 - 13.

15. Artikel, welcher eine Bördelfalzverklebung gemäss Artikel 14 aufweist, insbesondere Transportmittel, besonders bevorzugt ein Automobil, Bus, Lastkraftwagen, Schienenfahrzeug, ein Schiff oder ein Luftfahrzeug, oder eine Weissware, insbesondere eine Waschmaschine, Tumbler oder Geschirrspüler.
